# EUROPEAN PATENT APPLICATION

(11) **EP 4 712 232 A1**
(43) Date of publication of application: **18.03.2026**
(21) Application number: 25200042.7
(22) Date of filing: 03.09.2025
(51) Int. Cl.: H01M 50/209, H01M 50/503, H01M 50/507, H01M 50/569

(54) **ELECTRICAL CELL MODULE, AND A BUSBAR ASSEMBLY FOR AN ELECTRICAL CELL MODULE**

(30) Priority: 06.09.2024 GB 202413113
(71) Applicant: Fortescue Zero Limited, Kidlington, England OX5 1GB (GB)
(72) Inventor: LUKEHURST, Ben, Oxford, OX5 1GB (GB); SHELLIE, Ben, Oxford, OX5 1GB (GB); VESMA, Nathan, Oxford, OX5 1GB (GB)
(74) Representative: HGF

(57) **Abstract**

A busbar assembly for an electrical cell module is disclosed having a pair of opposing module end plates supporting an adjacent pair of cell stacks. The assembly includes a frame member having first and second engaging means to cooperatingly mount the busbar assembly, in an assembled position, to the module end plates, and a receiving portion having a series of apertures, extending between upper and lower faces. The assembly includes a plurality of busbar elements, each having a first surface and an opposing second surface, wherein each aperture of the receiving portion receivingly engages at least one busbar element with its first surface oriented towards the lower face. Each aperture includes a support portion and a retaining protrusion to cooperatingly restrict relative movement of the busbar elements between the upper lower faces of the receiving portion as the assembly is mounted to the electrical cell module in the assembled position.

## Description

### TECHNICAL FIELD

The present invention relates to an electrical cell module, particularly an electrical cell module including at least two cell stacks. A busbar assembly for an electrical cell module is also disclosed.

### BACKGROUND

Energy storage systems, including electrical cell modules incorporating multiple individual cells, are used in a variety of applications including electric vehicles. A basic unit of an electrical storage system is a cell, also known as a battery or a battery cell. Cells are typically one of three common formats: pouch, prismatic or cylindrical, depending on the shape and characteristics of the cell body. The cell body houses an electrochemical system for storing energy. As used herein, prismatic cells may also include pouch cells that are mounted within a cell body, such as a frame or housing, to give a predetermined shape to the pouch cell. In this way, prismatic cells may include a cell including a rigid cell body, and cell terminals for extracting charge from the cell.

It is known for a series of cells to be collectively mounted within a frame to provide a cell stack. A cell stack has a stack length including a total of the thicknesses of all of the cells within the cell stack.

Known electrical cell modules may be mounted indirectly to a vehicle chassis within a housing unit in order to enclose the electrical cell module and provide protection. In certain examples, the housing unit also provides space to enclose other electrical systems such as power inverters, fuses and safety components, power distributors, or systems for monitoring performance of the electrical cell module. Consequently, any variation in the stack length increases leads to a poor fit of a cell stack within the space allocated for within the electrical cell module or within the vehicle chassis.

Known methods for manufacturing cells lead to a range tolerances in dimensions of the cell bodies. Typically, cells each have a tolerance on its thickness of around +/-0.3mm such that, for example, cell stacks formed of 12 cells together will have an aggregate tolerance, that is variance in stack length, of around +/-3.6mm. The aggregate tolerance means that cell stacks with significant numbers of cells, for example 10 or more, have an inherent risk of a poor fit within the vehicle chassis or housing unit. Cell stacks that do not fit reliably to the vehicle chassis or housing unit require adaptations, increasing manufacturing costs.

In certain known examples, electrical cell module designs are generally smaller with shorter cell stacks having fewer cells, for example fewer than 10, in order that the aggregate tolerance effects are less significant. In certain known examples, cell stacks are compressed to a fixed stack length to ensure an accurate fit within the electrical cell module. However, the underlying variability in cell thickness results in a variance in the compression on the cells between cell stacks. Other known cell stacks employ compressible spacers interspersed between cells in a cell stack. The spacers each compress to different degrees to accommodate cell thickness tolerances. However, the variable compression applied to each spacer necessarily creates different compressive forces on each cell. Excess compression of a cell risks damaging the cell body, leading to leaks. Too little compression of a cell will mean the cell does not operate at optimal efficiency. Furthermore, cells may swell after repeated use meaning that any variation in compression is exacerbated as the stack is used, increasing the risks of cell over-compression and cell damage.

Some manufacturers grade cells, so that cells are measured before assembly, and minimum thickness cells are paired with maximum thickness cells to ensure a more consistent stack length. The additional time involved in grading increases manufacturing costs and necessarily increases wastage of cells that do not provide suitable combinations of cell thickness.

Variations in cell dimensions make accurate connections via busbar elements unreliable. In particular, vertical position of cell terminals relative to a busbar assembly may vary, in addition to any variation in stack length. The variation leads to difficulties in welding the busbar elements to the cell terminals as the weld to each cell terminal requires alignment in the transverse and longitudinal directions, and adjustment of the weld height. In certain examples, the frame member of the busbar assembly distorts so adapt to the tolerances risking damage to the busbar assembly.

It is an aim of certain examples or embodiments of the present invention to solve, mitigate or obviate, at least partly, at least one of the problems and/or disadvantages associated with the prior art.

For example, it would be useful to provide an electrical cell module having multiple cell stacks, wherein every stack is a different length. That is, it would be useful for an electrical cell module to be able to accommodate multiple cell stacks, each of different stack lengths.

For example, it would also be useful to ensure that the mounting points of a busbar assembly, for mounting to and electrically connecting cell terminals, are always positioned accurately and consistently. The mounting points of a busbar assembly should be independent of the stack lengths of its cell stacks.

For example, it would be useful to create a busbar assembly that accommodates tolerances in the positions of the cell terminals without risk of damage or distortion to the frame member supporting the busbar elements.

### BRIEF SUMMARY

The invention is set out in the appended claims.

According to an aspect of the invention, there is provided a busbar assembly, for mounting to an electrical cell module having a pair of opposing module end plates supporting an adjacent pair of cell stacks, each cell stack including a series of cells stacked along a longitudinal direction between the pair of opposing module end plates, the busbar assembly including:
a frame member, including:
   a first end portion having first engaging means,
   a second end portion having second engaging means, wherein the first engaging means and the second engaging means are each configured to cooperatingly mount the busbar assembly, in an assembled position, to the pair of opposing module end plates of the electrical cell module, and
   a receiving portion, disposed between the first end portion and the second end portion, and having a lower face, oriented towards the pair of cell stacks in the assembled position, and an upper face, wherein the receiving portion includes a series of apertures, extending between the upper face and the lower face; and
a plurality of busbar elements, each busbar element having a first surface and an opposing second surface, wherein each aperture of the receiving portion is configured to receivingly engage at least one busbar element of the plurality of busbar elements with its first surface oriented towards the lower face;
wherein each aperture of the series of apertures includes a support portion disposed towards the first surface of the busbar element, and retaining protrusion disposed towards the second surface of the busbar element;
wherein the support portion and retaining protrusion are configured to cooperatingly restrict relative movement of the busbar elements between the upper face and the lower face of the receiving portion as the busbar assembly is mounted to the electrical cell module in the assembled position.

According to another aspect, there is provided an electrical cell module including:
a pair of opposing module end plates spaced apart by a predetermined distance in a longitudinal direction;
a first cell stack including a first series of cells stacked along the longitudinal direction to define a first stack length, wherein each cell of the first series of cells includes a pair of cell terminals arranged on a first side the electrical cell module;
a second cell stack including a second series of cells stacked along the longitudinal direction, in parallel to the first cell stack, the second cell stack defining a second stack length wherein the second stack length is different to the first stack length, and wherein each cell of the second series of cells includes a pair of cell terminals arranged on the first side; and
a busbar assembly including:
   a frame member having: a first end portion with a first engaging means, and a second end portion with a second engaging means, wherein the first engaging means and the second engaging means are each configured to cooperatingly fasten the busbar assembly, in an assembled position, to the pair of opposing module end plates;
   a receiving portion including a series of apertures extending between an upper face and a lower face of the receiving portion; and
   a plurality of busbar elements, each busbar element having a first surface and an opposing second surface, wherein each aperture of the receiving portion is configured to receivingly engage at least one busbar element of the plurality of busbar elements with its first surface oriented towards the lower face;
wherein the busbar assembly is configured so that, in the mounted position, each busbar element of the plurality of busbar elements contacts at least two cell terminals corresponding to at least one cell terminal of the first cell stack and at least one cell terminal of the second cell stack.

Aptly, a busbar element may be configured so that, in the assembled position, its first surface contacts either at least two cell terminals of the first cell stack, or at least two cell terminals of the second cell stack.

Aptly, a busbar element may be configured so that, in the assembled position, its first surface contacts at least one cell terminal of the first cell stack and at least one cell terminal of the second cell stack.

In these ways, busbar elements may be configured to provide any suitable electrical pathway through the cells of the electrical cell module. The electrical pathway may connect cells from adjacent pairs of cell stacks regardless of any misalignment due to differences in stack length or, regardless of variation in the heights of cell terminals.

Aptly, a support portion may span an aperture. Aptly the support portion may span an aperture in the longitudinal direction (that is in the direction of the longitudinal axis of the busbar assembly).

Aptly, each support portion may be configured to brace the, or each, busbar element engaged with the corresponding aperture so that, applying an urging force to the second surface of the busbar element deforms the busbar element about the support portion.

Aptly, each busbar element may include a first terminal portion and a second terminal portion. The first terminal portion and the second terminal portion may be spaced apart in a transverse direction (that is transverse to the longitudinal axis) and configured to be deformed towards the lower face of the frame member by the urging force. Typically, the urging force is provided by a welding head abutting the second surface of the busbar element and urging it towards the cell terminal.

Aptly, each busbar element may include a first series of terminal portions and a second series of terminal portions. The first series of terminal portions and the second series of terminal portions may be spaced apart in a transverse direction.

Aptly, the, or each of a first series of terminal portions may be configured to contact a cell terminal of the first cell stack, and the, or each, of a second series of second terminals may be configured to contact a cell terminal of the second cell stack.

In these ways, each busbar element may easily be electrically connected to cell terminals regardless of tolerances in the height of the cell terminals. Each busbar element may be welded to cell terminals of differing heights in a reliable manner.

Aptly, each busbar element of a sensor assembly may include a body portion, typically an elongate body portion. The body portion may adjoin the, or each, terminal portion of the first series of terminal portions with the, or each, terminal portion of the second series of terminal portions. The body portion provides electrical connectivity between the first series and the second series of terminal portions. The first series of terminal portions may be connected electrically in series with the second series of terminal portions.

Aptly, the body portion may be configured to lie on the support portion when the busbar element is engaged with the receiving portion.

Aptly, the body portion may include an elongate channel configured to partly surround the support portion when the busbar element is engaged with the receiving portion.

Aptly, the body portion may include a locating tab projecting on the first surface of the busbar element for engaging the support portion within the aperture.

Aptly, the associated support portion may include a locating recess for receiving the locating tab of the busbar element.

In these ways, each busbar element may be located readily and accurately within an aperture of the frame member.

Aptly, the support portion and the retaining protrusion may be configured to cooperatingly restrict relative movement of the busbar elements between the upper face and the lower face within a range of from 1 millimetre to 2 millimetres. Aptly, the relative movement is restricted to 1.5 millimetres. Aptly, the support portion and retaining protrusion may be configured to cooperatingly restrict relative movement of the busbar elements between the upper face and the lower face of the receiving portion as the busbar assembly is mounted to the electrical cell module in the assembled position.

Aptly, each retaining protrusion may be positioned above the support portion of the associated aperture of the receiving portion.

Aptly, each busbar element may include a thickness between the first surface and the opposing second surface. The thickness may be in a range of 1 millimetre to 2 millimetres. Aptly, the thickness may be 1.5 millimetres.

Aptly, each busbar element may include one or more of: aluminium, nickel, copper, or steel.

In these ways, the busbar elements are readily deformable by an urging force to accommodate a wide tolerance in the vertical height of the cell terminals.

Aptly, the frame member may be formed of a polymer material, including one or more of: a nylon material, a polycarbonate material, a polyether ether ketone (PEEK) material, or an acrylonitrile butadiene styrene (ABS) material. Aptly the frame member may be a blend of one or more of: a nylon material, a polycarbonate material, a polyether ether ketone (PEEK) material, or an acrylonitrile butadiene styrene (ABS) material. Aptly, the frame member is a blend of a polycarbonate material and an ABS material.

In this way, the frame member of the busbar assembly provides rigidity to support the busbar elements for connecting to cell terminals, for example by welding to the cell terminals. The busbar assembly is resistant to bending or deformation from urging the busbar elements to electrically connect to cell terminals. A more reliable alignment and connection between the busbar assembly and the rest of the electrical cell module is possible.

Aptly, each cell stack may include a pair of stack end plates mounted to outermost cells of the series of cells.

Aptly, at least one of a first cell stack or a second cell stack includes a support element stacked with the respective series of cells.

Aptly, the receiving portion may include a third engaging means. The third engaging means may be configured, in the assembled position, to fasten the busbar assembly to a support element stacked with either the first series of cells or the second series of cells. The third engaging means and the support element are configured, in an assembled position, to cooperatingly fasten the busbar assembly to the respective first cell stack or second cell stack.

In this way, aspects provide a busbar assembly with a means to register the frame member with each cell stack of the electrical cell module, improving alignment with the cell stacks regardless of any difference in overall stack lengths. The busbar assembly includes a first engaging means and a second engaging means to register the frame member with the module end plates. Fastening each engaging means to the respective module end plate and / or support element enables the busbar assembly to secured to the electrical cell module with a reduced risk of misalignment.

Aptly, the electrical cell module may include:
an opposing pair of module end plates spaced apart from one another along a longitudinal axis;
a first cell stack; and
a second cell stack;
wherein each of the first cell stack and second cell stack includes:
   a series of cells stacked along the longitudinal axis, and
   a pair of stack end plates, arranged at opposing ends of the series of cells, and configured to be fixed to one another in an assembled position wherein, in the assembled position, the pair of stack end plates apply to the series of cells a compressive force along the longitudinal axis, and define a stack length of the respective cell stack;
   wherein the compressive force applied to the first cell stack and the compressive force applied to the second cell stack are each within a predetermined operable range; and
   wherein the electrical cell module is configured so that, in a use position, each of the opposing pair of module end plates is fixedly engaged with one corresponding stack end plate of each of the first cell stack and the second cell stack such that:
      the module end plates are spaced apart from one another along the longitudinal axis by a predetermined distance, and
      the first stack length is different to the second stack length.

In this way, the aspects each allow electrical cell modules with multiple cell stacks to be easily assembled with a consistent compressive force applied to the cells in each cell stack. The efficiency of the cells in the electrical cell module is improved as every cell experiences a compressive force within its operable range. The compressive force is consistent regardless of any dimensional variations in individual cells, or between each cell stack. The electrical cell module permits use of cells with an increased range of tolerances, reducing manufacturing time and decreasing wastage from cells that would otherwise not have ideal dimensions.

Furthermore, the electrical cell module is assembled to a consistent, predetermined dimensions regardless of any dimensional variations in individual cells, or between each cell stack. The electrical cell module is installed more reliably and accurately to a vehicle chassis or other component. Manufacturing time and costs are reduced.

### BRIEF DESCRIPTION OF THE SEVERAL VIEWS OF THE DRAWINGS

Examples will now be described further with reference to the figures in which:
FIG. 1 shows a perspective view of an example electrical cell module according to an aspect;
FIG. 2 shows a perspective view of a cell stack of the electrical cell module of FIG. 1;
FIG. 3A shows an example support element of the cell stack of FIG. 2;
FIG. 3B shows a longitudinal cross-sectional view of the cell stack of FIG. 2;
FIG. 4A shows a perspective view of an example frame member of a busbar assembly according to an aspect;
FIG. 4B shows a perspective view of the frame member of FIG. 4A, with busbar elements;
FIG. 5A shows a close up cross-sectional view, and FIG. 5B shows a close up perspective view, of an aperture of the busbar assembly of FIG. 4B;
FIG. 6 shows top view of part of the electrical cell module of FIG. 1 with the cell stacks mounted to the module end plate in an assembled position; and
FIG. 7 shows a perspective view of the electrical cell module of FIG. 1 with the busbar assembly of FIG. 4B assembled to it.

### DETAILED DESCRIPTION

Certain terminology is used in the following description for convenience only and is not limiting. The words 'lower', 'upper', 'front', 'rear', 'up', and 'down' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

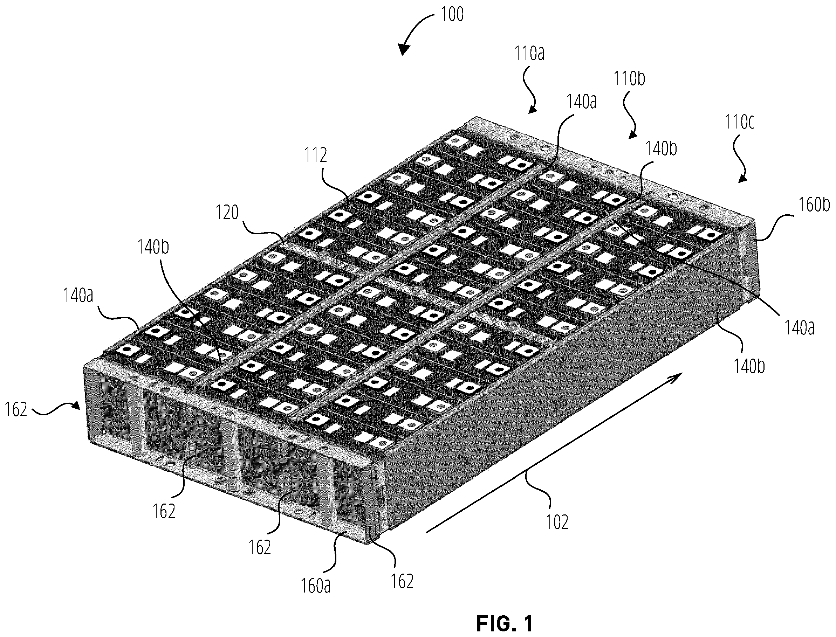

Referring now to FIG. 1 to FIG. 3B, there is shown certain features of an example electrical cell module 100. The electrical cell module 100 includes an opposing pair of module end plates 160a, 160b spaced apart from one another along a longitudinal axis 102. The electrical cell module 100 also includes a first cell stack 110a, a second cell stack 110b, and a third cell stack 110c.

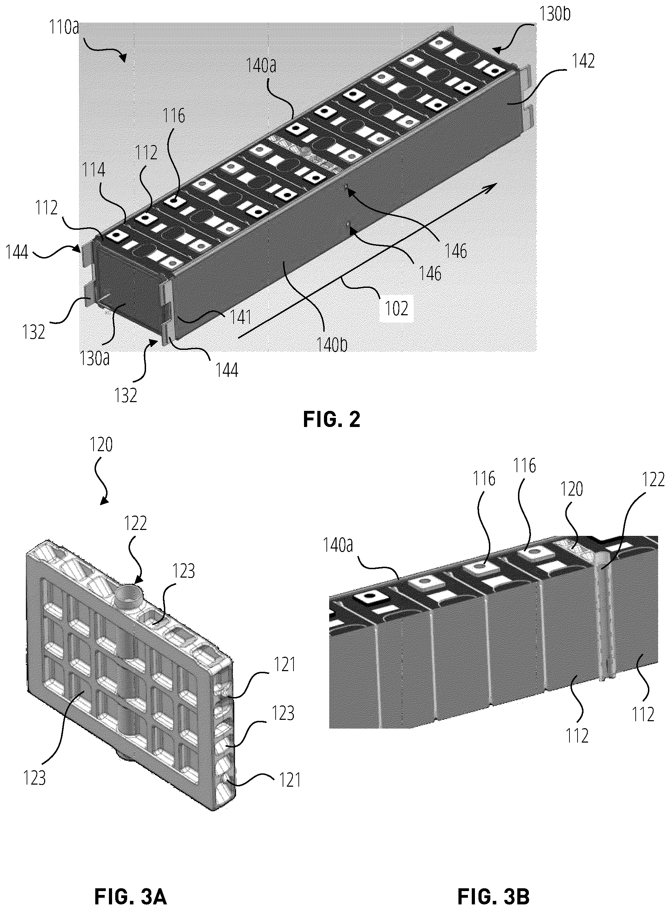

Referring particularly to FIG. 2, there is shown the first cell stack 110a representative of each of the first cell stack 110a, the second cell stack 110b, and the third cell stack 110c. The cell stack 110a includes: a series of cells 112 stacked along the longitudinal axis 102, as well as a pair of stack end plates 130a, 130b arranged at opposing ends of the series of cells 112 and configured to be fixed to one another in an assembled position. In the example electrical cell module 100, each series of cells has twelve prismatic cells.

In the assembled position, the pair of stack end plates 130a, 130b apply to the series of cells 112 a compressive force in the direction of the longitudinal axis 102. The respective pairs of stack end plates 130a, 130b also define a stack length of the each cell stack 110a, 110b, 110c. The compressive force applied to the first cell stack 110a, the compressive force applied to the second cell stack 110b, and the compressive force applied to the third cell stack 110c are each within a predetermined operable range. That is, the compressive force is within an operable compressive force range specified by the manufacturer of the cells 112.

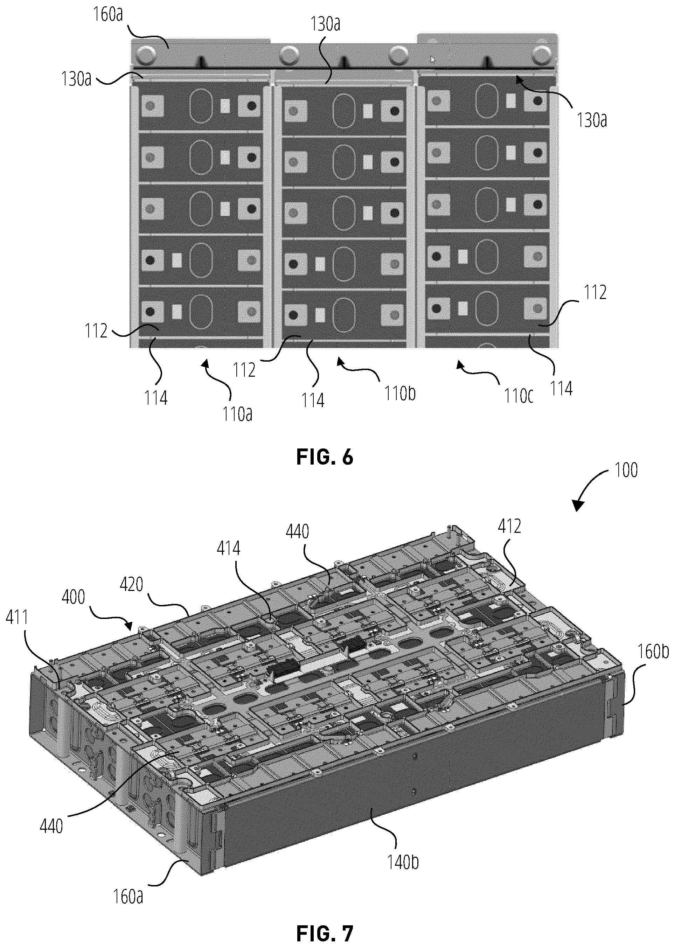

The electrical cell module 100 is configured so that each of the opposing pair of module end plates 160a, 160b is fixedly engaged, in a use position, with one corresponding stack end plate 130a, 130b of each of the first cell stack 110a, the second cell stack 110b and the third cell stack 110c. In the use position, the module end plates 160a, 160b are spaced apart from one another along the longitudinal axis 102 by a predetermined distance, and at least the first stack length is different to the second stack length. In the example, the first stack length is different to the second stack length and different to the third stack length, as described with reference particularly to FIG. 6.

In the assembled position, each pair of stack end plates 130a, 130b of the three cell stacks 110a, 110b, 110c are fixed to one another via an intermediary pair of support plates 140a, 140b. In this way, each pair of stack end plates 130a, 130b and associated pair of support plates 140a, 140b cooperatively form a cell stack housing unit. A cell stack housing unit surrounds a perimeter of each cell stack 110a, 110b, 110c.

Each cell 112 includes a perimeter wall having faces oriented in the direction of the longitudinal axis 102. The pair of support plates 140a, 140b abuts opposing faces of each perimeter wall. The perimeter wall defines a thickness of each cell 112 in the longitudinal direction of the cell stack. The thickness is a nominal thickness, subject to tolerances, prior to any compressive force applied to the cell 112 within the cell stack 110a, 110b, 110c.

The housing unit extends longitudinally and transversely around the respective cells 112. An upper surface of each cell 112 remains exposed so that its cell terminals 116 are accessible for electrically connecting to the cell terminals 116.

Each support plate 140a, 140b extends along the longitudinal axis 102 between a proximal end portion 142 and a distal end portion 141. The proximal end portion 142 has a proximal guide element 144. The distal end portion 141 has a distal guide element 144. Additionally, each of the first stack end plate 130a and the second stack end plate 130b includes a pair of engaging elements 132. The engaging elements 132 are spaced apart from one transverse to the longitudinal axis 102, so that they are arranged on opposing edges of the respective stack end plate 130a, 130b.

The engaging elements 132 are positioned to contactingly engage the corresponding proximal guide element 144 or distal guide element 144 in a pre-assembled position. The pre-assembled position corresponds to a position in which stack end plates 130a, 130b are brought into contact with the cell stack housing unit but without applying a compressive force to the series of cells. The proximal guide elements 144 and the distal guide elements 144 are each configured to guide the corresponding first stack end plate 130a and second stack end plate 130b towards one another along the longitudinal axis 102 from the pre-assembled position to the assembled position.

In the example each guide element 144 includes an inwardly-facing longitudinal surface. Each engaging element 132 is a tab oriented so, that with the stack end plate 130a, 130b engaged with the series of cells, each tab projects away from the series of cells. In this way, each longitudinal surface abuts an outer face of an engaging element 132 to restrict lateral movement of the corresponding as the stack end plate 130a, 130b moved to the assembled position.

In the assembled position, the first stack end plate 130a is welded to each of the proximal guide elements 144 and the second stack end plate 130b is welded to each of the distal guide elements 144. That is, a weld is provided between each guide element 144 and engaging element 132 to fix the stack end plate 130a, 130b in the assembled position.

The first module end plate 160a and the second module end plate 160b of the pair of module end plates each extend in a transverse direction (transverse to the longitudinal axis 102), perpendicular to the longitudinal axis 102. The first module end plate 160a and the second module end plate 160b each include a series of mount portions 162 spaced along the transverse direction. In the example, a first mount portion 162 includes an outwardly-facing surface. The surface is provided on a vertical plate at each transverse end of the module end plate 160a, 160b. A second mount portion 162 includes an elongate slot 164 through the module end plate 160a, 160b.

Each module end plate 160a, 160b is thereby configured to guide stack end plates 130a, 130b of each cell stack cell stacks 110a, 110b, 110c of differing stack lengths from a pre-use position to a use position.

In the pre-use position, the mount portions 162 of the first module end plate 160a contactingly engages each of the first stack end plates 130a. The mount portions 162 of the second module end plate 160b contactingly engages each of the second stack end plates 130b. The mount portions 162 and the stack end plates are each configured to guide the corresponding first module end plate 160a and second module end plate 160b towards one another along the longitudinal axis, from the pre-use position to the use position.

In particular, the outwardly-facing surface of each first mount portion 162 abuts an engaging element 132 of the cell stack 110a, 110b, 110c as the corresponding module end plate 160a is moved from the pre-use position to the use position. Lateral movement of the module end plate 160a is restricted. Also, the elongate slots 164 of each second mount portion 162 abuts engaging elements 132 of the cell stacks 110a, 110b, 110c as the module end plate 160a is moved from the pre-use position to the use position. Lateral movement of the module end plate 160a is restricted.

As shown particularly in FIG. 6, in each case, because at least one component of each abutment, that is one of each abutting engaging element 132 and mount portion 162 extends along the longitudinal axis 102 then the use position accommodates a variable stack length. For a cell stack 110b of minimal length, the module end plate 160a, 160b is guided only a short distance by the cell stack engaging elements 132 until it is in the use position. For a cell stack 110c of maximal length, the module end plate 160a, 160b is guided a further distance by the cell stack engaging elements 132 until it is in the use position. For a cell stack 110a of intermediary length, the module end plate 160a, 160b is guided an intermediary distance by the cell stack engaging elements 132 until it is in the use position.

In the use position, each stack end plate 130a, 130b is welded to the corresponding module end plate 160a, 160b. A weld is provided between each engaging element 132 and mount portion 162 to fix the module end plate 160a, 160b in the assembled position.

Each module end plate 160a, 160b is configured to be releasably secured to a pair of fixing points provided on a support body, for example a module enclosure, a vehicle chassis or a module support frame. In the example, the module end plates 160a, 160b include an aperture for receiving a fastener, such as a bolt. As the module end plates 160a, 160b are secured to the cell stacks 110a, 110b, 110c at a predetermined distance, the electrical cell module 100 is reliably and accurately securable to fixing points on the support body spaced apart by the predetermined distance.

Referring now to FIG. 3A and FIG. 3B, there is shown a support element 120. Each cell stack 110a, 110b, 110c includes one support element 120 stacked with the respective series of cells. The support element 120 is stacked between a pair of cells at a mid-point of the series of cells. The support element 120 is a rigid plate including a number of recesses 123 on its outer surfaces. The recesses 123 reduce the weight of the support element 120 while maintaining its rigidity.

The support element 120 includes a series of registration elements 121. The registration elements 121 are configured to locate with a mutually-compatible locator element 146 on one of the associated support plates 140a, 140b. In the example, the registration elements 121 are provide on opposing side surfaces of the support element 120, to be disposed on the longitudinal faces of the series of cells when stacked. Each registration element 121 is in the form of a protrusion projecting in the transverse direction from the support element 120. The protrusion is sized to receivingly locate within a locator element 146 in a corresponding support plate 140a, 140b. In the example, each locator element 146 is an aperture through the support plate 140a, 140b (shown particularly in FIG. 2).

In this way, prior completing the assembly of the cell stack 110a, 110b, 110c, each series of cells may by located with the support plates 140a, 140b. The support element 120 ensures the series of cells are centrally located, along the longitudinal axis 102, with each support plate 140a, 140b. The series of cells are accurately registered with the support plates 140a, 140b. Consequently, each stack end plate 130a, 130b is mountable to the series of cells so that the engaging elements 132 contactingly engage the guide elements 144 of the support plates 140a, 140b.

The support element 120 includes a threaded bore 122. The threaded bore 122 is oriented to extend vertically through the support element 120. The threaded bore 122 provides an additional means of securing the electrical cell module 100 to a fixing point provided on a support body, for example a module enclosure, a vehicle chassis or a module support frame. In conjunction with the registration elements 121, the spacing of the support element 120 to the module end plates 160a, 160b is also reliably and accurately set.

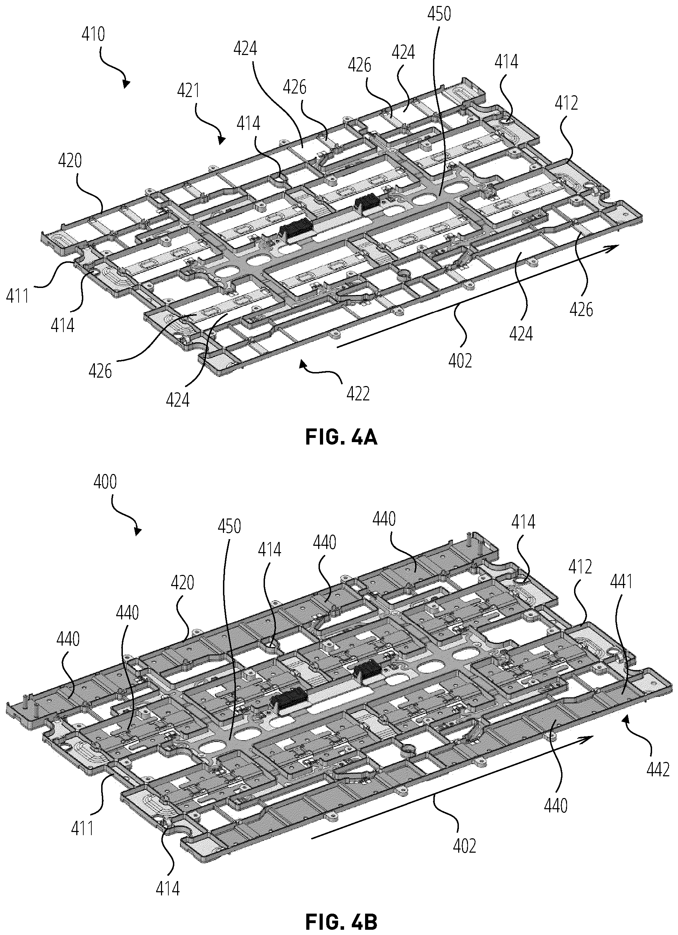

Referring now to FIG. 4A to FIG. 5B, there is shown a busbar assembly 400 having a frame member 410 and a plurality of busbar elements 440. The busbar assembly 400 is suitable for mounting to an electrical cell module having a pair of opposing module end plates supporting cell stacks, such as the electrical cell module 100 described here.

The frame member 410 includes a first end portion 411 and a second end portion 412 spaced apart along a longitudinal axis 402. The first end portion 411 has a first engaging means 414 and the second end portion 412 has a second engaging means 414. In the example, the first and second engaging means 414 are each through-holes in the frame member 410 that receive fasteners (not shown). Together, the first engaging means 414 and the second engaging means 414 cooperatingly mount the busbar assembly 400, in an assembled position, to a pair of opposing module end plates of the associated electrical cell module.

The frame member 410 also includes a receiving portion 420 disposed between the first end portion 411 and the second end portion 412. The receiving portion 420 has a lower face 422, oriented towards the cell stacks in the assembled position, and an upper face 421. The receiving portion 420 includes a series of apertures 424, extending between the upper face 421 and the lower face 422.

The busbar assembly 400 includes a plurality of busbar elements 440, shown particularly in FIG. 4B. Each busbar element 440 has a first surface 441 and an opposing second surface 442. Each aperture 424 of the receiving portion 420 is configured to receivingly engage one busbar element 440 of the plurality of busbar elements 440 with its first surface 441 oriented towards the lower face 422 of the receiving portion 420. Each aperture is defined within a portion of the frame member 410 and shaped to correspond with the busbar element 440 that it receives. In this way, each busbar element 440 can be located with the frame member 410 for engaging cell terminals of the electrical cell module.

Each aperture 424 of the series of apertures 424 includes one or more support portion 426 disposed towards the first surface 441 of the busbar element 440. Each support portion 426 spans the corresponding aperture in the longitudinal direction. In the example shown, the support portion 426 are formed as rods extending across the aperture 424.

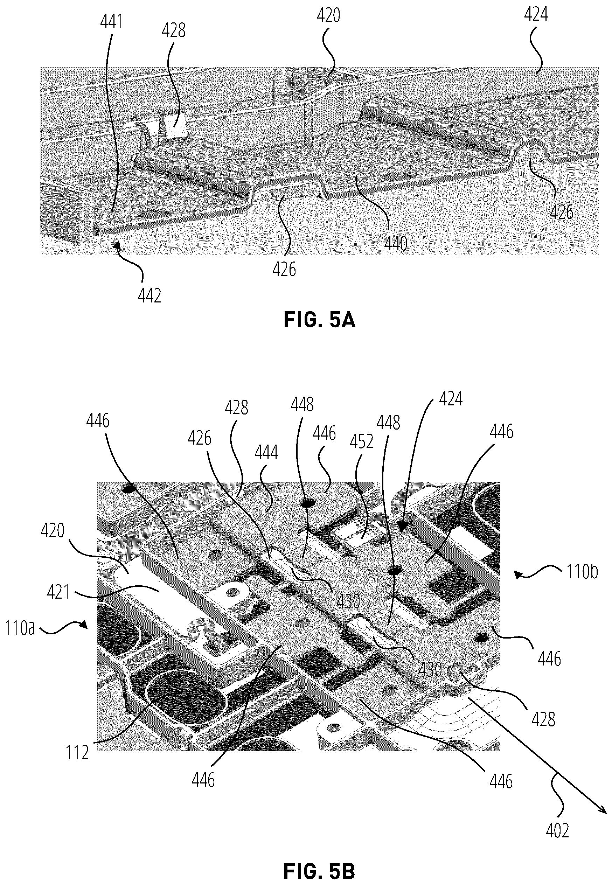

As shown particularly in FIG. 5A, the support portions 426 within an aperture 424 may have different thickness according to the required rigidity required. Certain support portions 426, typically thinner support portions 426, are formed to support the busbar element 440 in the aperture 424. Busbar elements 440 pre-formed with elongate channels can be fitted around support portions 426 to partly surround the support portion when the busbar element is engaged with the receiving portion 420. Certain support portions 426, typically thicker support portions 426, are arranged to brace the busbar element 440 engaged with the corresponding aperture 424 so that, applying an urging force to the second surface 442 of the busbar element 440 deforms the busbar element 440 about the support portion 426.

Each aperture 424 also includes a retaining protrusion 428 disposed towards the second surface 442 of the busbar element 440. With the busbar element 440 engaged with the receiving portion 420, the support portion 426 and the retaining protrusion 428 of each aperture 424 act on opposing surfaces of the busbar element 440. The support portions 426 and retaining protrusions 428 of each aperture 424 cooperatingly restrict relative vertical movement of the busbar elements 440 in the receiving portion 420. That is, relative movement of the busbar elements 440 is restricted between the upper face 421 and the lower face 422 of the receiving portion 420 as the busbar assembly 400 is mounted to the electrical cell module in the assembled position.

The busbar elements of the busbar assembly 400 have different configurations, depending on arrangement of the cell terminals to which they contact. For example, referring to FIG. 4B, a first series of busbar elements 440 are arranged outermost edges of the frame member 410, and a second series of busbar elements 440 are arranged inward of the first series of busbar elements 440.

Each of the first series of busbar elements 440 include a substantially rectangular body portion, oriented with a longest edge of the body portion in parallel to the longitudinal axis 402. Each of the first series of busbar elements 440 is positioned to contact a group of cell terminals of one cell stack.

Referring additionally to FIG. 5B, an example of the second series of busbar element 440 is shown. This busbar element 440 includes an elongate body portion 444 adjoining a plurality of terminal portions 446. The body portion 444 is aligned lengthwise with the longitudinal axis 402. The body portion 444 lies on the support portion 426 when the busbar element 440 is engaged with the receiving portion 420, so that a first series of terminal portions 446 are disposed on a first side of the support portion 426 and a second series of terminal portion 446 are disposed on a second side. The first series of terminal portions 446 and the second series of terminal portions 446 are spaced apart in the transverse direction. Each terminal portion 446 is configured to be deformed towards the lower face 422 of the frame member 410 by the urging force that forms the busbar element 440 around the support portion 426. In this way, the terminal portions 446 each extend vertically through the aperture 424 that the busbar element 440 that is located within.

Each busbar element 440 of the second series is configured so that, in the assembled position, its first surface 441 contacts a plurality of cell terminals 116 of a first cell stack and a plurality of cell terminals 116 of a second cell stack. In particular, the first series of busbar elements 440 contact cell terminals 116 of the first cell stack, and the second series of busbar elements 440 contact cell terminals 116 of the second cell stack.

In the example shown in FIG. 5B, the support portion 426 of the aperture 424 includes a locating recess 430. The body portion 444 of the busbar element 440 includes a locating tab 448. The locating tab 448 projects from the first surface 441 of the busbar element 440. The locating recess 430 and the locating tab 448 are mutually configured so that the locating tab 448 locates in the locating recess 430, thereby providing a means to accurately locate the busbar element 440 in the aperture 424.

The retaining protrusion 428 is positioned in the aperture 424 to be above the associated support portion 426. The support portion 426 and the retaining protrusion 428 are spaced apart vertically to provide space for the busbar element 440 to be retained within the aperture 424 while having a controlled amount of vertical movement. In particular, the support portion 426 and 428 cooperatingly restrict relative movement of the busbar element 440 between the upper face 421 and the lower face 422 to a 1.5 millimetres.

The busbar assembly 400 also includes a sensor assembly 450. The sensor assembly 450 is mounted to the upper face 421 of the frame member 410. The sensor assembly 450 includes a series of sensors 452 arranged to contact and monitor each of the busbar elements 440. Typically, the sensor assembly 450 monitors the temperature of the busbar element, to ensure it remains in ideal operating temperature range. The sensor assembly 450 may also measure the voltage of the associated busbar element.

Referring to FIG. 7, there is shown the assembled electrical cell module 100, including the busbar assembly 400. The electrical cell module 100 includes cell stacks 110a, 110b, 110c having different stack lengths to one another.

The engaging means 414 of the end portions 411, 412 of the busbar assembly 400 are aligned with the module end plates 160a, 160b of the electrical cell module 100 and secured to one another by suitable fasteners (not shown). In this way the busbar elements 440 are each located with the cell terminals to form a desired electrical pathway through the cells 112 of the electrical cell module 100.

By providing a frame member with busbar elements that are restricted vertically, the busbar assembly accommodates, and enables electrical connectivity between, cell terminals of cell stacks having a range of height tolerances. The provision of the support portions enables the busbar elements to be deformed vertically when urged against the cell terminals with variable heights, as typically occurs when busbar elements are welded to the cell terminals during assembly of the electrical cell module.

Furthermore, the electrical cell module is also able to accommodate cell stacks having variable stack lengths. The busbar elements connect to multiple cells in the longitudinal axis direction, in adjacent stacks, even when differently spaced.

The welding process is simplified because the busbar element is welded to each cell terminal using the same process, regardless of any positional variation of the cell terminals. The cost of manufacturing of the busbar assembly is reduced.

The cells within each cell stack are mounted for use and electrically connected to one another while secured under optimal conditions for each cell.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A busbar assembly, for mounting to an electrical cell module having a pair of opposing module end plates supporting an adjacent pair of cell stacks, each cell stack comprising a series of cells stacked along a longitudinal direction between the pair of opposing module end plates, the busbar assembly comprising:
a frame member, comprising:
a first end portion having first engaging means,
a second end portion having second engaging means, wherein the first engaging means and the second engaging means are each configured to cooperatingly mount the busbar assembly, in an assembled position, to the pair of opposing module end plates of the electrical cell module,
a receiving portion, disposed between the first end portion and the second end portion, and having a lower face, oriented towards the pair of cell stacks in the assembled position, and an upper face, wherein the receiving portion comprises a series of apertures, extending between the upper face and the lower face; and
a plurality of busbar elements, each busbar element having a first surface and an opposing second surface, wherein each aperture of the receiving portion is configured to receivingly engage at least one busbar element of the plurality of busbar elements with its first surface oriented towards the lower face;
wherein each aperture of the series of apertures comprises a support portion disposed towards the first surface of the busbar element, and retaining protrusion disposed towards the second surface of the busbar element;
wherein the support portion and retaining protrusion are configured to cooperatingly restrict relative movement of the busbar elements between the upper face and the lower face of the receiving portion as the busbar assembly is mounted to the electrical cell module in the assembled position.

2. The busbar assembly of claim 1, wherein each busbar element is configured so that, in the assembled position, its first surface contacts either at least two cell terminals of the first cell stack, or at least two cell terminals of the second cell stack.

3. The busbar assembly of claim 1 or 2, wherein each busbar element is configured so that, in the assembled position, its first surface contacts at least one cell terminal of the first cell stack and at least one cell terminal of the second cell stack.

4. The busbar assembly of any one of claims 1 to 3, wherein each support portion spans the corresponding aperture in the longitudinal direction.

5. The busbar assembly of claim 4, wherein each support portion is configured to brace the, or each, busbar element engaged with the corresponding aperture so that, applying an urging force to the second surface of the busbar element deforms the busbar element about the support portion.

6. The busbar assembly of claim 5, each busbar element further comprising a first terminal portion and a second terminal portion, wherein the first terminal portion and the second terminal portion are spaced apart in a transverse direction and configured to be deformed towards the lower face of the frame member by the urging force.

7. The busbar assembly of any one of claims 1 to 6, wherein each busbar element comprises an elongate body portion adjoining the, or each, first terminal portion with the, or each, second terminal portion.

8. The busbar assembly of claim 7, wherein the elongate body portion is configured to lie on the support portion when the busbar element is engaged with the receiving portion, and, optionally, wherein the body portion comprises an elongate channel configured to partly surround the support portion when the busbar element is engaged with the receiving portion.

9. The busbar assembly of claim 7 or claim 8, wherein the body portion comprises a locating tab projecting on the first surface of the busbar element for engaging the support portion within the aperture, and, optionally, wherein the associated support portion comprises a locating recess for receiving the locating tab of the busbar element.

10. The busbar assembly of any one of claims 1 to 9, wherein the support portion and the retaining protrusion are configured to cooperatingly restrict relative movement of the busbar elements between the upper face and the lower face within a range of from 1 millimetre to 2 millimetres.

11. The busbar assembly of any one of claims 1 to 10, wherein the receiving portion further comprises a third engaging means configured, in the assembled position, to fasten the busbar assembly to a support element stacked with either the first series of cells or the second series of cells.

12. An electrical cell module comprising:
a pair of opposing module end plates spaced apart by a predetermined distance in a longitudinal direction;
a first cell stack comprising a first series of cells stacked along the longitudinal direction to define a first stack length, wherein each cell of the first series of cells comprises a pair of cell terminals arranged on a first side the electrical cell module;
a second cell stack comprising a second series of cells stacked along the longitudinal direction, in parallel to the first cell stack, the second cell stack defining a second stack length wherein the second stack length is different to the first stack length, and wherein each cell of the second series of cells comprises a pair of cell terminals arranged on the first side; and
a busbar assembly comprising:
a frame member having: a first end portion with a first engaging means, and a second end portion with a second engaging means, wherein the first engaging means and the second engaging means are each configured to cooperatingly fasten the busbar assembly, in an assembled position, to the pair of opposing module end plates;
a receiving portion comprising a series of apertures extending between an upper face and a lower face of the receiving portion; and
a plurality of busbar elements, each busbar element having a first surface and an opposing second surface, wherein each aperture of the receiving portion is configured to receivingly engage at least one busbar element of the plurality of busbar elements with its first surface oriented towards the lower face;
wherein the busbar assembly is configured so that, in the mounted position, each busbar element of the plurality of busbar elements contacts at least two cell terminals corresponding to at least one cell terminal of the first cell stack and at least one cell terminal of the second cell stack.

13. The electrical cell module of claim 12, wherein each aperture of the series of apertures comprises a support portion disposed towards the first surface of the busbar element, and retaining protrusion disposed towards the second surface of the busbar element; and
wherein the support portion and retaining protrusion are configured to cooperatingly restrict relative movement of the busbar elements between the upper face and the lower face of the receiving portion as the busbar assembly is mounted to the electrical cell module in the assembled position.

14. The electrical cell module of claim 12 or claim 13, wherein each support portion is configured to brace the, or each, busbar element engaged with the corresponding aperture so that, applying an urging force to the second surface of the busbar element deforms the busbar element about the support portion.

15. The electrical cell module of any one of claims 12 to 14, wherein at least one of the first cell stack or the second cell stack comprises a support element stacked with the respective series of cells, wherein the receiving portion of the busbar assembly comprises a third engaging means, and wherein the third engaging means and the support element are each configured, in an assembled position, to cooperatingly fasten the busbar assembly to the respective first cell stack or second cell stack.
